# EUROPEAN PATENT APPLICATION

(11) **EP 4 513 394 A1**
(43) Date of publication of application: **26.02.2025**
(21) Application number: 22944129.0
(22) Date of filing: 30.05.2022
(51) Int. Cl.: G06Q 10/00

(54) **SEMI-AUTOMATIC KNOWLEDGE GRAPH CONSTRUCTION METHOD AND APPARATUS, AND COMPUTER DEVICE**

(71) Applicant: Siemens Aktiengesellschaft, 80333 München (DE)
(72) Inventor: CHE, Xiaoyin, Beijing 100097 (CN); HUI, Haotian, Suzhou City Jiangsu 21500 (CN); SHENG, Ruogu, Beijing 100072 (CN); WANG, Ganghua, Suzhou City Jiangsu 215122 (CN)
(74) Representative: Isarpatent
(86) International application number: PCT/CN2022/096066
(87) International publication number: WO 2023/230788

(57) **Abstract**

Disclosed in the present application are a semi-automatic knowledge graph construction method and apparatus, and a device and a computer storage medium. The method comprises: on the basis of a historical fault case library for an industrial scenario, generating a phenomenon node, a reason node and a solution node, wherein the phenomenon node indicates the state of a device when a fault occurs, the reason node indicates an event that causes the fault, and the solution node indicates how to resolve the event that caused the fault; and for at least one of the phenomenon node, the reason node and the solution node, displaying a plurality of candidate nodes on a computer graphical user interface; and determining one by one whether the plurality of candidate nodes are to be included in a graph.

## Description

### TECHNICAL FIELD

This application relates to natural language processing, and specifically, to a method and an apparatus for constructing a semi-automatic knowledge graph, a computer device, and a storage medium.

### BACKGROUND

A knowledge graph is a structured semantic knowledge base that is used to describe concepts and a relationship between the concepts in the physical world in a symbol form. A basic component unit of the knowledge graph is an "entity-relationship-entity" triple, an entity, and a related attribute-value pair of the entity. Entities are connected to each other by using a relationship to form a reticular knowledge structure. However, in many scenarios, knowledge extraction is not accurate enough. In addition, a large quantity of labor is wasted in a process of generating the knowledge graph.

### SUMMARY

This application provides a method, including: generating a phenomenon node, a cause node, and a solution node based on a historical fault case library in an industrial scene, where the phenomenon node indicates a state of a device when a fault occurs, the cause node indicates an event that causes the fault, and the solution node indicates how to resolve the event that causes the fault; for at least one of the phenomenon node, the cause node, and the solution node, displaying a plurality of candidate nodes on a graphical user interface of a computer; and confirming, one by one, whether the plurality of candidate nodes are included in the graph.

In the foregoing manner, human labor in a process of generating the knowledge graph may be reduced while accuracy of generating the knowledge graph is ensured.

In an embodiment, the method further includes: displaying a plurality of candidate relationships between the plurality of candidate nodes and at least one of the phenomenon node, the cause node, and the solution node on the graphical user interface of the computer; and confirm, one by one, whether the plurality of candidate relationships are reserved.

In an embodiment, the confirming, one by one, whether the plurality of candidate nodes are included in the graph further includes: confirming, one by one based on algorithm recommendation and user confirmation, whether the plurality of candidate nodes are included in the graph.

In an embodiment, the selecting one of the plurality of candidate relationships as a candidate relationship further includes: confirming, one by one based on algorithm recommendation and user confirmation, whether the plurality of candidate relationships are reserved.

In an embodiment, the algorithm recommendation may be determining semantics of the plurality of candidate nodes based on a repetition degree of content of the plurality of candidate nodes, to merge the plurality of candidate nodes.

In an embodiment, one of the plurality of candidate relationships is selected as a candidate relationship by determining that content indicated by the solution node can eliminate the event that causes the fault.

In an embodiment, at least one of the phenomenon node, the cause node, and the solution node is standardized, where the standardization includes creating or deleting a candidate relationship between the plurality of candidate nodes, and creating or deleting the plurality of candidate nodes.

In an embodiment, the plurality of candidate nodes of the knowledge graph are updated based on a second query input from a user.

This application further provides an apparatus for constructing a semi-automatic knowledge graph, including: a generation module, configured to generate a phenomenon node, a cause node, and a solution node based on a historical fault case library in an industrial scene, where the phenomenon node indicates a state of a device when a fault occurs, the cause node indicates an event that causes the fault, and the solution node indicates how to resolve the event that causes the fault; a display module, configured to: for at least one of the phenomenon node, the cause node, and the solution node, display a plurality of candidate nodes on a graphical user interface of a computer; and a selection module, configured to confirm, one by one, whether the plurality of candidate nodes are included in the graph.

This application further provides a computer device, including a memory and a processor, where the memory stores a computer program, and when the processor executes the computer program, the method is implemented.

This application further provides a computer-readable storage medium, where the computer-readable storage medium stores a computer program, where when the computer program is executed by a processor, the method is implemented.

### BRIEF DESCRIPTION OF THE DRAWINGS

The following accompanying drawings are only intended to provide schematic illustrations and explanations of this application, but are not intended to limit the scope of this application, where:
FIG. 1 is a flowchart of a method for constructing a semi-automatic knowledge graph according to an embodiment of this application;
FIG. 2 is a schematic diagram of a structure of an apparatus for constructing a semi-automatic knowledge graph according to an embodiment of this application; and
FIG. 3 is a schematic diagram of a structure of a device for constructing a semi-automatic knowledge graph according to an embodiment of this application.

Reference numerals are as follows:

| | |
|---|---|
| S101-S103 | Steps |
| 200: | Apparatus for constructing a semi-automatic knowledge graph |
| 201: | Generation module |
| 202: | Display module |
| 203: | Selection module |
| 300: | Computer device |
| 302: | Processor |
| 304: | Memory |

### DETAILED DESCRIPTION

To have a clearer understanding of the technical features, the objectives, and the effects of this application, specific implementations of this application are now illustrated with reference to the accompanying drawings.

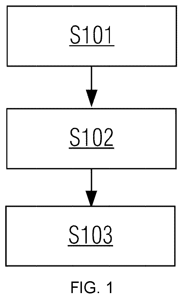

FIG. 1 is a flowchart of a method for constructing a semi-automatic knowledge graph according to an embodiment of this application.

To provide a solution to a problem in an industrial scene, a relationship between the problem and the solution in the industrial scene may be described by using the knowledge graph. The knowledge graph may be constructed based on a historical fault case library.

The knowledge graph includes a plurality of nodes and relationships between the nodes. A node represents an atomic knowledge point of a phenomenon, a cause, or a solution of a fault. The node may be a short sentence or a long clause in a document in the historical fault case library. Nodes may be classified into the following types: a phenomenon node, a cause node, and a solution node (a phenomenon and the phenomenon node, a cause and the cause node, and a solution and the solution node are used interchangeably below).

The phenomenon may indicate a state of a device when a fault occurs. For example, a coal feeder is out of coal (referred to as P1 below). The coal feeder is a mechanical device that can accurately adjust a coal feeding quantity of a coal mill based on a load requirement. The coal mill is a machine that breaks coal blocks and grinds the coal blocks into coal powder. In an embodiment, the phenomenon may be that a belt of the coal feeder makes an abnormal sound (referred to as P2 below). In an embodiment, the phenomenon may further be that the coal mill works without load (referred to as P3 below).

The cause may indicate a condition that causes the fault. For example, a motor of the coal feeder trips (referred to as R1 below), that is, a power supply of a power device of the coal feeder is unintentionally disconnected. In another embodiment, the cause may be that the belt of the coal feeder is stuck (referred to as R2 below).

The solution may indicate how to resolve a problem described in the phenomenon or a problem described in the cause. For example, the solution may be to restart the motor (referred to as S1 below). In another embodiment, the solution may be to replace the motor (referred to as S2 below). In another embodiment, the solution may be to remove a foreign matter near the belt of the coal feeder (referred to as S3 below).

How to generate the knowledge graph is described below. Generally, the knowledge graph is a process of first constructing a small knowledge graph and then merging the small knowledge graph into an existing knowledge graph. A process of generating the small knowledge graph includes a process of generating a candidate node, confirming the candidate node, and confirming a candidate relationship. A process of merging the small knowledge graph into the existing knowledge graph includes merging nodes and associating nodes.

In an embodiment, this application provides a method for constructing a semi-automatic knowledge graph, including: generating a phenomenon node, a cause node, and a solution node based on a historical fault case library in an industrial scene, where the phenomenon node indicates a state of a device when a fault occurs, the cause node indicates an event that causes the fault, and the solution node indicates how to resolve the event that causes the fault; for at least one of the phenomenon node, the cause node, and the solution node, displaying a plurality of candidate nodes on a graphical user interface of a computer; and selecting one of the plurality of candidate nodes as a candidate node.

In the foregoing manner, human labor in a process of generating the knowledge graph may be reduced while accuracy of generating the knowledge graph is ensured.

The foregoing process is specifically described below.

Step S101: Generate a phenomenon node, a cause node, and a solution node based on a historical fault case library in an industrial scene, where the phenomenon node indicates a state of a device when a fault occurs, the cause node indicates an event that causes the fault, and the solution node indicates how to resolve the event that causes the fault.

A user enters a "query input" into a retrieval-based diagnostic system, and the query input is, for example, "a fault of a coal feeder". The retrieval system retrieves a most relevant historical case document. Then, three target fields (a phenomenon, a cause, and a solution) are extracted from the historical case document. Then, the target fields are decomposed into sentence units (SU) through segmentation. Then, the plurality of sentence units are aggregated based on labels of the target fields. A specific manner is not described herein in detail, and may be found in the PCT patent application PCT/CN2022/072778.

Step S102: For at least one of the phenomenon node, the cause node, and the solution node, display a plurality of candidate nodes on a graphical user interface of a computer.

The candidate node may be generated from the historical fault case library. The historical fault case library may be a process of recording occurrence of a fault once. For example, the historical fault case library may be the following text descriptions: "A coal feeder runs for two hours, and then the coal feeder runs out of coal. In addition, after the coal feeder runs for one hour, a belt of the coal feeder makes an abnormal sound." From the above text, the candidate node may be generated, and describes that "the coal feeder runs for two hours".

Node confirmation is confirmation of a candidate node. For example, the user may not use the above node "the coal feeder runs for two hours" as the candidate node. In an embodiment, the above node confirmation may be participated by the user. For example, the above method may be implemented by software. The software has a user interface, and the interface prompts the user to confirm: whether the candidate node can represent an atomic knowledge point of a common fault; and if the candidate node can, whether semantics of the candidate node is related to the query input. When the candidate node may represent the atomic knowledge point of the common fault, the candidate node may be used as the candidate node, and a label is added to an existing knowledge graph. In addition, when the semantics of the candidate node is related to the query input, a connection relationship between the candidate node and the existing knowledge graph is confirmed. In an embodiment, when the user denies a relationship between the semantics of the candidate node and the query input, the connection relationship between the candidate node and the existing knowledge graph is deleted. In an embodiment, no relationship is established between a newly established node and the existing knowledge graph.

Node merging is described below. In an embodiment, algorithm recommendation may be determining semantics of the plurality of candidate nodes based on a repetition degree of content of the plurality of candidate nodes, to merge the plurality of candidate nodes. For example, a candidate node 1 may be that a coal feeder is out of coal, and a candidate node 2 may be that a quantity of coal of the coal feeder sharply decreases. Because the candidate node 1 and the candidate node 2 semantically represent same content, the candidate node 1 and the candidate node 2 may be merged. There are many manners of determining whether semantics of the candidate nodes is the same. For example, the semantics of the candidate nodes may be determined based on the repetition degree. In an embodiment, if titles of the candidate nodes are similar enough, or most of sentence units associated with the candidate nodes overlap, it may be determined that the semantics of the candidate nodes is the same.

Step S103: Confirm, one by one, whether the plurality of candidate nodes are included in the graph.

In an embodiment, a plurality of candidate relationships between the plurality of candidate nodes and at least one of the phenomenon node, the cause node, and the solution node is displayed on the graphical user interface of the computer. One of the plurality of candidate relationships is selected as a candidate relationship. For example, a connection between R1 and P1 is displayed on the graphical user interface of the computer, and a connection between R2 and P1 is displayed. In this case, the user may determine which of the foregoing connections is a relationship between P and R.

In the foregoing manner, human labor in a process of generating the knowledge graph may be reduced while accuracy of generating the knowledge graph is ensured.

In another embodiment, whether the plurality of candidate nodes are included in the graph may be confirmed one by one based on algorithm recommendation and user confirmation. In another embodiment, whether the plurality of candidate relationships are reserved is confirmed one by one based on algorithm recommendation and user confirmation. In the prior art, the knowledge graph is generated based on the algorithm recommendation, or manually. This application proposes a semi-automatic manner, that is, the knowledge graph is generated through a combination of an algorithm and manual work. In the foregoing manner, human labor in a process of generating the knowledge graph may be reduced while accuracy of generating the knowledge graph is ensured.

In another embodiment, one of the plurality of candidate relationships may be selected as the candidate relationship by determining that content indicated by the solution node can eliminate the event that causes the fault. For example, the user may determine whether S1 may eliminate an event in R1. That is, the user may determine whether tripping of the motor of the coal feeder may be resolved by restarting the motor. If the tripping of the motor of the coal feeder may be resolved, a connection relationship between S1 and R1 is confirmed. In such a semi-automatic manner, that is, joint confirmation of the user and the algorithm, accuracy of generating the knowledge graph is increased and human labor is reduced.

In another embodiment, at least one of the phenomenon node, the cause node, and the solution node is standardized, where the standardization includes creating or deleting a candidate relationship between the plurality of candidate nodes, and creating or deleting the plurality of candidate nodes. For example, when it is not determined, based on the algorithm, that P3 and P2 are repeated candidate nodes, the user may delete the phenomenon P3. In this case, the knowledge graph may be made more accurate.

In another embodiment, the plurality of candidate nodes of the knowledge graph are updated based on a second query input from a user. For example, the user may enter "a fault of a coal feeder", so that a candidate node of "tripping of a motor of the coal feeder" can be generated.

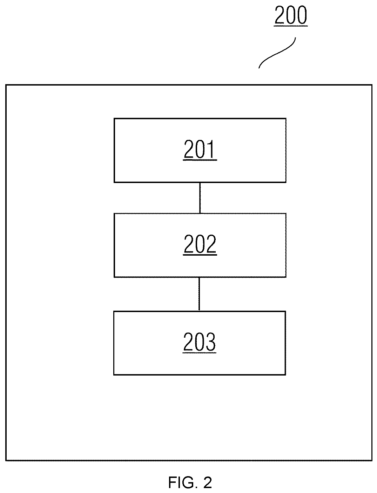

It should be understood that, although the steps of the flowcharts in FIG. 1 is displayed sequentially according to arrows, the steps are not necessarily performed according to a sequence indicated by the arrows. Unless otherwise explicitly specified in this application, execution of the steps is not strictly limited, and the steps may be performed in other sequences. Moreover, at least some of the steps in FIG. 2 may include a plurality of steps or a plurality of stages. These steps or stages are not necessarily executed at the same time, but may be executed at different moments. A sequence of execution of these steps or stages is not necessarily performed sequentially, but may be performed in turn or alternately with other steps or at least some of steps or stages of other steps.

FIG. 2 provides an apparatus 200 for constructing a semi-automatic knowledge graph, including: a generation module 201, configured to generate a phenomenon node, a cause node, and a solution node based on a historical fault case library in an industrial scene, where the phenomenon node indicates a state of a device when a fault occurs, the cause node indicates an event that causes the fault, and the solution node indicates how to resolve the event that causes the fault; a display module 202, configured to: for at least one of the phenomenon node, the cause node, and the solution node, display a plurality of candidate nodes on a graphical user interface of a computer; and a selection module 203, configured to confirm, one by one, whether the plurality of candidate nodes are included in the graph.

In an embodiment, the apparatus further includes a confirmation module, configured to: display a plurality of candidate relationships between the plurality of candidate nodes and at least one of the phenomenon node, the cause node, and the solution node on the graphical user interface of the computer; and confirm, one by one, whether the plurality of candidate relationships are reserved.

In an embodiment, the apparatus further includes a confirmation module, configured to confirm, one by one based on algorithm recommendation and user confirmation, whether the plurality of candidate nodes are included in the graph.

In an embodiment, the apparatus further includes a confirmation module, further configured to confirm, one by one, whether the plurality of candidate relationships are reserved.

In an embodiment, the apparatus further includes a merging module, configured to the algorithm recommendation is determining semantics of the plurality of candidate nodes based on a repetition degree of content of the plurality of candidate nodes, to merge the plurality of candidate nodes.

In an embodiment, the apparatus further includes: a selection module, configured to select one of the plurality of candidate relationships as a candidate relationship by determining that content indicated by the solution node can eliminate the event that causes the fault.

In an embodiment, the apparatus further includes: a standardization module, configured to standardize at least one of the phenomenon node, the cause node, and the solution node, where the standardization includes creating or deleting a candidate relationship between the plurality of candidate nodes, and creating or deleting the plurality of candidate nodes.

In an embodiment, the apparatus further includes: an update module, configured to update the plurality of candidate nodes of the knowledge graph based on a second query input from a user.

For a specific limitation on the apparatus for constructing a semi-automatic knowledge graph, refer to the limitation on the method for constructing a semi-automatic knowledge graph above. Details are not repeated herein again. Some or all of the modules in the foregoing apparatus can be implemented by software, hardware, and a combination thereof. The foregoing modules may be embedded in or independent of a processor in a computer device in a form of hardware, or may be stored in a memory in a computer device in a form of software, so that the processor invokes and executes the operations corresponding to the foregoing modules.

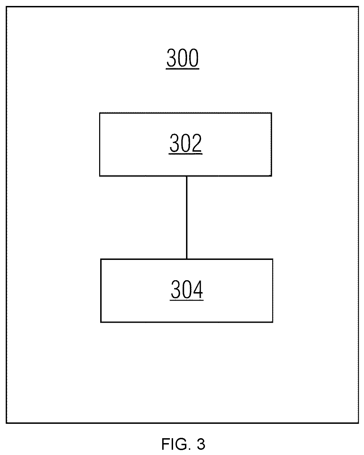

FIG. 3 provides a computer device for constructing a semi-automatic knowledge graph. According to an embodiment, a computer device 300 may include a processor 302, and the processor 302 executes a computer program stored in a memory 304. When the computer program is executed by the processor, the method for constructing a semi-automatic knowledge graph is implemented.

A person skilled in the art may understand that the structure shown in FIG. 3 is only a block diagram of a partial structure related to the solution in this application, and does not constitute a limitation on the computer device to which this application is applied. Specifically, the computer device may include more or fewer components than those shown in the figure, or some components may be combined, or a different component deployment may be used.

This application further provides a computer-readable storage medium, where the computer-readable storage medium stores a computer program, and when the computer program is executed by a processor, the foregoing steps are implemented.

A person of ordinary skill in the art may understand that all or some of procedures of the method in the foregoing embodiments may be implemented by a computer program instructing relevant hardware. The computer program may be stored in a non-volatile computer-readable storage medium. When the computer program is executed, the procedures of the foregoing method embodiments may be implemented. References to the memory, the storage, the database, or other medium used in the embodiments provided in this application may all include at least one of a non-volatile or a volatile memory. The non-volatile memory may include a read-only memory (ROM), a magnetic tape, a floppy disk, a flash memory, an optical memory, or the like. The volatile memory may include a random access memory (RAM) or an external cache memory. By way of an illustration and not limitation, the RAM may be in various forms, such as a static random access memory (SRAM) or a dynamic random access memory (DRAM).

The technical features in the foregoing embodiments may be randomly combined. For concise description, not all possible combinations of the technical features in the embodiments are described. However, provided that combinations of the technical features do not conflict with each other, the combinations of the technical features are considered as falling within the scope described in this specification.

The foregoing embodiments only describe several implementations of this application, which are described specifically and in detail, but cannot be construed as a limitation to the patent scope of this application. It should be noted that for a person of ordinary skill in the art, several transformations and improvements can be made without departing from the idea of this application. These transformations and improvements belong to the protection scope of this application. Therefore, the protection scope of the patent of this application shall be subject to the appended claims.

## Claims

1. A method for constructing a semi-automatic knowledge graph, comprising:
generating a phenomenon node, a cause node, and a solution node based on a historical fault case library in an industrial scene, wherein the phenomenon node indicates a state of a device when a fault occurs, the cause node indicates an event that causes the fault, and the solution node indicates how to resolve the event that causes the fault;
for at least one of the phenomenon node, the cause node, and the solution node, displaying a plurality of candidate nodes on a graphical user interface of a computer; and
confirming, one by one, whether the plurality of candidate nodes are comprised in the graph.

2. The method according to claim 1, further comprising:
displaying a plurality of candidate relationships between the plurality of candidate nodes and at least one of the phenomenon node, the cause node, and the solution node on the graphical user interface of the computer; and confirming, one by one, whether the plurality of candidate relationships are reserved.

3. The method according to claim 1, wherein the confirming, one by one, whether the plurality of candidate nodes are comprised in the graph further comprises: confirming, one by one based on algorithm recommendation and user confirmation, whether the plurality of candidate nodes are comprised in the graph.

4. The method according to claim 2, wherein confirming, one by one based on algorithm recommendation and user confirmation, whether the plurality of candidate relationships are reserved.

5. The method according to claim 3, wherein the algorithm recommendation is determining semantics of the plurality of candidate nodes based on a repetition degree of content of the plurality of candidate nodes, to merge the plurality of candidate nodes.

6. The method according to claim 4, wherein selecting one of the plurality of candidate relationships as the candidate relationship by determining that content indicated by the solution node can eliminate the event that causes the fault.

7. The method according to claim 5, wherein standardizing at least one of the phenomenon node, the cause node, and the solution node, wherein the standardization comprises creating or deleting the candidate relationship between the plurality of candidate nodes, and creating or deleting the plurality of candidate nodes.

8. The method according to claim 1, further comprising: updating the plurality of candidate nodes of the knowledge graph based on a second query input from a user.

9. An apparatus (200) for constructing a semi-automatic knowledge graph, comprising:
a generation module (201), configured to generate a phenomenon node, a cause node, and a solution node based on a historical fault case library in an industrial scene, wherein the phenomenon node indicates a state of a device when a fault occurs, the cause node indicates an event that causes the fault, and the solution node indicates how to resolve the event that causes the fault;
a display module (202), configured to: for at least one of the phenomenon node, the cause node, and the solution node, display a plurality of candidate nodes on a graphical user interface of a computer; and
a selection module (203), configured to confirm, one by one, whether the plurality of candidate nodes are comprised in the graph.

10. The apparatus according to claim 9, further comprising: a confirmation module, configured to: display a plurality of candidate relationships between the plurality of candidate nodes and at least one of the phenomenon node, the cause node, and the solution node on the graphical user interface of the computer; and confirm, one by one, whether the plurality of candidate relationships are reserved.

11. The apparatus according to claim 9, further comprising: a confirmation module, configured to confirm, one by one based on algorithm recommendation and user confirmation, whether the plurality of candidate nodes are comprised in the graph.

12. The apparatus according to claim 10, wherein the confirmation module is further configured to confirm, one by one, whether the plurality of candidate relationships are reserved.

13. The apparatus according to claim 11, further comprising: a merging module, configured to the algorithm recommendation is determining semantics of the plurality of candidate nodes based on a repetition degree of content of the plurality of candidate nodes, to merge the plurality of candidate nodes.

14. The apparatus according to claim 12, further comprising: a selection module, configured to select one of the plurality of candidate relationships as the candidate relationship by determining that content indicated by the solution node can eliminate the event that causes the fault.

15. The apparatus according to claim 13, further comprising: a standardization module, configured to standardize at least one of the phenomenon node, the cause node, and the solution node, wherein the standardization comprises creating or deleting the candidate relationship between the plurality of candidate nodes, and creating or deleting the plurality of candidate nodes.

16. The apparatus according to claim 9, further comprising: an update module, configured to update the plurality of candidate nodes of the knowledge graph based on a second query input from a user.

17. A computer device, comprising a memory and a processor, wherein the memory stores a computer program, and when the processor executes the computer program, the steps of the method according to any one of claims 1 to 8 are implemented.

18. A computer-readable storage medium, wherein the computer-readable storage medium stores a computer program, and when the computer program is executed by a processor, the steps of the method according to any one of claims 1 to 8 are implemented.
